# FASCICULE DE BREVET EUROPEEN

(11) **EP 0 535 282 B1**
(45) Date de publication et mention de la délivrance du brevet: **24.03.1999**
(21) Numéro de dépôt: 91402607.5
(22) Date de dépôt: 30.09.1991
(51) Int. Cl.: C04B 28/02, C04B 40/00, E01C 7/26, C04B 24/36

(54) **Liant composite, son procédé d'obtention et son application, dans les revêtements routiers**
Kompositbindemittel, Verfahren zu seiner Herstellung und seine Verwendung für Strassendecken
Composite binder, process for its manufacture and its use in road pavements

(43) Date de publication de la demande: 07.04.1993
(73) Titulaire: COLAS S.A., F-92653 Boulogne-Billancourt Cédex (FR)
(72) Inventeur: Chambard, René, F-75012 Paris (FR); Gaultier, Jacques,, F-92260 Fontenay aux Roses (FR); Pellion, Robert, F-78114 Magny les Hameaux (FR); Perrono, Gérard, F-78210 Saint-Cyr-L'Ecole (FR)
(74) Mandataire: Phélip, Bruno

(56) Documents cités:
- BE-A- 903 034
- FR-A- 1 453 419
- FR-A- 2 395 233
- FR-A- 2 606 801
- FR-A- 2 661 173
- CHEMICAL ABSTRACTS, vol. 82, no. 24, 16 Juin 1975, Columbus, Ohio, US; abstract no. 159776X, K. SUZUKI: 'Asphalt concrete' page 235 ;
- CHEMICAL ABSTRACTS, vol. 94, no. 6, 9 Février 1981, Columbus, Ohio, US; abstract no. 35438S, JAPAN NATIONAL RAILWAYS ET AL.: 'Fiber-reinforced cement asphalt compositions.' page 313 ;
- CHEMICAL ABSTRACTS, vol. 83, no. 10, 8 Septembre 1975, Columbus, Ohio, US; abstract no. 84064Y, DENKI KAGAKU K.K.K.: 'Cement composition for cement-asphalt pavement.' page 319 ;

## Description

La présente invention concerne un liant composite, son procédé d'obtention et son application dans les revêtements routiers.

Par liant composite, on entend dans la présente invention, un produit homogène constitué d'au moins une substance minérale dont le durcissement résulte d'une réaction d'hydratation en présence d'au moins un adjuvant spécifique et d'une émulsion aqueuse d'au moins un corps hydrocarboné.

Pour certaines applications, le liant composite de l'invention est chargé avec des matières minérales, métalliques ou organiques.

Il est connu depuis fort longtemps que les liants à prise hydraulique: ciment, chaux mixte, associés à des sols en terrassements permettent d'améliorer leur portance et d'augmenter la résistance des remblais. Depuis quelques décennies, l'étude rationnelle des propriétés de ces liants a permis de préciser les conditions requises pour permettre leur utilisation dans l'élaboration des structures modernes de chaussées.

Les couches ainsi liées forment un matériau doué d'une grande rigidité, indépendante de la température, et assurant une bonne répartition des charges: le module de rigidité est au minimum de 15.000 MPa. En revanche, elles présentent des inconvénients notables. Le matériau est fragile, du fait de sa grande rigidité, entraînant des cassures lors de mouvements faibles du sol par exemple: on note une faible déformation relative: de 20 à 60 x 10⁻⁶. La partie supérieure de l'assise possède une moins grande résistance, ce qui nécessite une couche de roulement épaisse si le trafic est moyen ou important. On observe toujours, sur ces couches, des fissurations de prise ou de retrait thermique. Enfin, l'aménagement progressif des structures avec ces matériaux est impossible, ce qui empêche l'adaptation ultérieure de l'assise au trafic.

Concurremment aux graves hydrauliques, il a été développé depuis plusieurs décennies des techniques à base d'émulsions de bitume dont les formes les plus élaborées sont désignées sous l'appellation "graves-émulsion". Les avantages des matériaux traités aux liants hydrocarbonés sont de plusieurs ordres. Ils sont déformables sous sollicitation lente: déformation relative: 90 à 150 x 10⁻⁶ à 10°C. En outre, ces matériaux ont une bonne résistance en surface, ce qui autorise des couches de roulement de faible épaisseur.Enfin, ils offrent la possibilité d'aménagements progressifs des structures dans lesquelles ils interviennent. En revanche, ils ont l'inconvénient de présenter une faible rigidité: le module de rigidité à 15°C se situe entre 1000 et 5000 MPa et plus communément entre 2000 et 3500 MPa.

L'homme de l'art a donc été contraint de faire un choix entre deux techniques à froid présentant l'une et l'autre des avantages, mais aussi des inconvénients spécifiques. Il a bien été envisagé dans le passé de faire appel aux deux natures de liants, hydrauliques d'une part, hydrocarbonés d'autre part, mais chacun de ces liants était introduit séparément dans le squelette minéral. Une telle technologie d'application n'était pas sans risque quant à la compatibilité réciproque de ces liants, leur action pouvant même être perturbée dans certains cas.

Jusqu'à ce jour pour autant qu'on le sache, on ne connaît pas un liant composite liquide à phases entièrement homogènes entre l'émulsion aqueuse de liant hydrocarboné et le liant hydraulique.

FR-A-7545074 décrit une masse auto-durcissable à mise en oeuvre immédiate qui est constituée d'une émulsion de bitume dans de l'eau et d'un mélange de ciment et d'une huile minérale fluide.

FR-A-8616023 décrit un liant composite constitué d'un produit hydrocarboné en phase dispersée et de ciment dispersé dans l'eau. Ce produit ne donne pas entière satisfaction car il n'est pas assez homogène.

Le document JP-A-49.121.825, publié le 21 novembre 1974 et cité dans Chemical Abstracts, vol. 82 N^{o}24, 16 juin 1975 (abrégé N^{o}159.776X), décrit un procédé de fabrication en plusieurs étapes d'un produit de béton et de bitume utilisable comme matériau pour la construction des routes. Dans une première étape, on réalise une pâte de ciment et d'émulsion de bitume, cette dernière comprenant nécessairement une émulsion de polymère insoluble ou légèrement soluble, du type caoutchouc synthétique SBR, combiné à une solution aqueuse d'un polymère soluble, tel qu'un dérivé de cellulose. Dans la deuxième étape, on mélange la pâte susdite avec un agrégat pour préparer un matériau plastique et dans la troisième étape, on malaxe ce matériau plastique avec du ciment ou des matières minérales pulvérulentes pour former un matériau non plastique utilisable pour la construction des routes. Dans la première étape, le polymère soluble peut être du gluconate de sodium et il est présent en quantité importante par rapport au ciment mis en oeuvre.

Le document JP-A-75.33218 publié le 31 mars 1975 et cité dans Chemical Abstracts, vol. 83 N^{o}10, 8 septembre 1975 (abrégé N^{o}84064Y) décrit une composition de ciment destinée à un revêtement routier à base de bitume et de ciment. Le constituant ciment résulte d'un mélange de chaux, de ciment alumineux, d'un sulfate minéral et de ciment Portland. Le constituant ciment durcit rapidement pour conférer au produit final une résistance élevée avec l'élasticité désirée. Un exemple typique de matériau capable de durcir dès 1,5 heures après sa préparation répond à la formulation suivante : 125 parties de ciment alumineux, 125 parties d'anhydrite (sulfate de calcium), 50 parties de chaux, 750 parties de ciment Portland, 1000 parties de sable, 1000 parties d'émulsion de bitume, 300 parties d'eau, 20 parties de carbonate de sodium et 1,5 g de gluconate de sodium. Ce dernier est présent à raison de 0,15% en poids par rapport au liant hydraulique.

Il existe donc un besoin d'un liant composite homogène susceptible d'être stocké et utilisé ultérieurement.

Le liant composite, selon la présente invention permet une régularité des dosages. Il est facile à appliquer en raison de sa grande homogénéité. Sa forme liquide assure une utilisation très aisée.

L'homme de l'art sait qu'il est difficile de bien mélanger des produits de nature totalement différente.

La présente invention répond aux besoins mentionnés ci-dessus en permettant la fabrication d'un liant composite homogène avec lequel on obtient des matériaux traités présentant de nombreux avantages. La rigidité apportée par le liant hydraulique assure une bonne répartition des charges: le module de rigidité varie avec la température. La capacité de déformation sous chargements répétés est plus importante que celle d'un matériau traité aux liants hydrauliques. Il n'y a pas ou très peu de fissurations de prise ou de retrait thermique. En ce qui concerne le dosage du liant dans les matériaux à traiter, les avantages sont de deux ordres: qualitativement on obtient une meilleure répartition de la fraction hydraulique du liant se présentant sous la forme d'une dispersion aqueuse qu'elle ne l'est en cas d'introduction sous forme de poudre sèche: quantitativement la mesure d'un liquide est plus aisée et plus fiable qu'un dosage pondéral d'une poudre en continu.

L'émulsion de l' invention doit être convenablement formulée pour être compatible avec le liant hydraulique. En particulier il ne faut pas que le liant hydraulique flocule ou qu'il fasse prise rapidement.

Il convient aussi de choisir un agent tensioactif approprié et un rapport convenable des constituants.

La présente invention a pour objet un liant composite selon la revendication 1.

La présente invention a également pour objet un procédé d'obtention du liant composite selon la revendication 10.

La présente invention a encore pour objet l'application du liant composite dans les revêtements routiers.

La présente invention concerne également les caractéristiques énoncées isolément ou en combinaison dans les revendications 2 à 9 et 11 à 14.

Dans le liant hydraulique de l'invention, le rapport eau d'ajout:ciment est compris dans la gamme de 0 à 50 parties d'eau pour 100 parties de ciment.

Il est bien évident que l'eau en quantité suffisante est rajoutée si nécessaire pour avoir un produit liquide.

Il convient de préciser que lors de l'obtention de l'émulsion aqueuse dans l'homogénéiseur, le rapport liant hydrocarboné: phase aqueuse est de 30:70 à 75:25.

Généralement le rapport liant hydrocarboné sur phase aqueuse est de 60:40.

La température de l'émulsion peut varier dans la gamme de 5 à 70°C et celle du ciment dans la gamme de 5 à 50°C. Bien évidemment tout dépend des conditions climatiques d'application.

Le liant composite de l'invention ne durcit pas avant un laps de temps prolongé, ce qui permet son stockage et son utilisation ultérieure.

Le liant composite de l'invention comprend, en mélange préalable à son emploi:
[1] Une ou des matières hydrocarbonées sous forme d'émulsion aqueuse. Ces hydrocarbures peuvent être issus de la distillation du pétrole brut et/ou élaborés à partir de dérivés de l'industrie carbochimique.
   S'il s'agit d'hydrocarbures d'origine pétrolière, on utilisera:
   - des bitumes purs tels qu'ils sont spécifiés dans la norme française T 65-001;
   - des bitumes non spécifiés dans les normes françaises et produits par les raffineries de pétrole pour répondre à des critères et des emplois particuliers: c'est le cas par exemple de certains bitumes dits "de régénération" obtenus par mélange de base de désasphaltage au propane ramollie par une coupe de distillation extraite au solvant. Ces mélanges ont pour caractéristiques principales d'être pauvres en asphaltènes et riches en composés aromatiques;
   - des solvants pétroliers paraffiniques, naphténiques ou aromatiques;
   - des composés pétroliers résultant de distillats de vapocraquage, de fond de colonne de distillation des condensats récupérés sur le gaz naturel ou d'autres procédés de traitement pétrochimiques.

   Dans le cas des hydrocarbures d'origine carbochimiques, on peut citer:
   - les goudrons purs tels qu'ils sont spécifiés dans la norme française T 65-021;
   - les huiles de fluxage de houille élaborées à partir de mélanges d'huiles de distillation primaire et de fractions correspondant à des coupes de caractéristiques précises; on pourra inclure dans cette série de produits des huiles lourdes dénommées "créosotes";
   - les brais mous et spéciaux, résultant de mélanges de goudrons purs et d'huiles plastifiantes carbochimiques;
[2] Une ou différentes catégories de liants hydrauliques; il peut s'agir de ciments tels que ceux définis par la norme française NF P 15-301, et/ou d'autres liants hydrauliques, par exemple les ciments de laitier à la chaux (norme française NF P 15-306), les ciments naturels (norme française NF P 15-308);
[3] Au moins un adjuvant destiné à apporter des caractéristiques ou propriétés spécifiques.
   Lorsqu'il convient de modifier la ou les substances hydrocarbonées, on peut utiliser des polymères organiques introduits soit dans l'hydrocarbure de base avant sa mise en émulsion, soit dans la phase aqueuse de ladite émulsion, soit encore dans l'émulsion terminée avant son mélange avec le ou les liants hydrauliques.
   Lorsqu'il s'agit de modifier le comportement de la fraction à prise hydraulique, on utilisera des retardateurs de prise, des accélérateurs de durcissement, des fluidifiants, des plastifiants, des inhibiteurs et autres agents analogues.
   Quand il conviendra de modifier les caractéristiques du liant composite, on utilisera un ou plusieurs agents destinés à agir sur le comportement rhéologique de l'ensemble des composants. Il s'agira par exemple dans cet exemple spécifique d'agents thixotropes.
[4] Des charges minérales (farines siliceuses et/ou calcaires, fibres naturelles ou manufacturées comme les fibres de roche ou les fibres de verre) ou des fibres organiques du genre fibres végétales, fibres synthétiques comme les polyamides, le polychlorure de vinyle, les polyesters, le polyéthylène ou le polypropylène et analogues.
[5] Des charges métalliques dont des exemples sont de la poudre d'aluminium, de la limaille de fer ou des alliages de cuivre et analogues.

Dans le liant composite de l'invention, l'émulsion d'hydrocarbure est une émulsion directe (du type lipophile/hydrophile ou éventuellement une émulsion multiple du type hydrophile/lipophile/hydrophile. On peut également envisager l'utilisation de microémulsions. Compte-tenu de la nature des agents tensioactifs utilisés pour conférer la stabilité requise aux matières hydrocarbonées dispersées dans la phase aqueuse, l'émulsion peut être anionique ou cationique. Le choix des agents de surface auxquels il est fait appel n'est cependant pas uniquement limité à ces deux seules catégories, en effet on peut aussi employer des tensioactifs ampholytes et/ou nonioniques. Parmi le grand nombre de substances tensioactives susceptibles d'être utilisées, on citera, à titre d'exemple, pour les agents tensioactifs cationiques les sels d'ammonium quaternaire, pour les tensioactifs ampholytes les sels de potassium des protéines d'origine animale ou végétale et enfin pour les tensioactifs nonioniques les alkylphénol-polyéthoxylés.

Il est bien évident que les différents produits ci-dessus sont donnés à titre d'exemples non limitatifs.

L'invention est illustrée par l'exemple non limitatifs ci-après où les quantités indiquées en parties s'entendent pour 1000 parties de liant composite total.

### EXEMPLE

A 135,8 parties d'une base dure de désasphaltage au propane de pénétrabilité ne dépassant pas 30 dixièmes de mm (mesurée selon la Norme Française NF T 66-004), chauffée à 180°C environ, on ajoute 81,6 parties d'une huile aromatique extraite au solvant, de viscosité cinématique à 50°C comprise entre 300 et 500 mm²/s (mesurée selon la norme française NF T 60-100), chauffée à 80°C environ. Ces deux matières premières sont ensuite mélangées et le mélange homogène est maintenu à 130°C environ. On prépare par ailleurs 144,9 parties d'une solution d'agent tensio-actif composée de 5,6 parties de nonylphénol-polyéthoxylé, de 1,4 partie de plastifiant pour béton et de 137,9 parties d'eau chauffée à 40°C.

Les deux phases sont alors dispersées par passage dans un homogénéiseur de type moulin colloïdal. On obtient 362,3 parties d'une émulsion contenant 60% de phase hydrocarbonée dispersée.

Lorsque cette émulsion est refroidie, on lui ajoute sous agitation rapide 202,9 parties d'eau froide et 434,8 parties de ciment. Le liant composite liquide est prêt à l'emploi.

L'adjuvant qui à ce jour a donné le plus de satisfaction dans la mise en oeuvre de la présente invention est un liquide jaunâtre de densité de 1,17 à 25°C et de pH neutre connu sous la dénomination commerciale de Plastiretard et provenant de la société SIKA S.A.. Ce produit qui est conforme aux normes françaises NF P 18-337 et NF P 18-336 est du gluconate.

Il importe de remarquer que si l'adjuvant peut être mélangé directement à l'émulsion de liant hydrocarboné avant son mélange avec le liant hydraulique ou par la suite après le mélange entre l'émulsion de liant hydrocarboné et le liant hydraulique, par contre les diverses charges éventuelles doivent être introduites après le mélange de l'émulsion du liant hydrocarboné et du liant hydraulique qui a reçu au moins l'adjuvant destiné à maîtriser la vitesse de prise du liant hydraulique.

## Revendications

1. Liant composite pour revêtements routiers, constitué d'une émulsion aqueuse d'au moins un liant hydrocarboné et d'au moins un liant hydraulique, en mélange avec divers adjuvants et éventuellement des charges, caractérisé en ce qu'il comprend, pour 100 parties de liant hydraulique, environ 30 à 300 parties d'émulsion aqueuse de liant hydrocarboné et environ 0,2 à 1 partie d'au moins un adjuvant destiné à maîtriser la vitesse de prise du liant hydraulique, choisi parmi les plastifiants retardateurs pour béton, ledit liant composite étant un liquide homogène de viscosité inférieure à 1 Pas, susceptible d'être stocké et utilisé ultérieurement.

2. Liant composite selon la revendication 1, caractérisé en ce que l'adjuvant est un produit contenant du gluconate de sodium, en particulier le produit connu sous la dénomination commerciale PLASTIRETARD.

3. Liant composite selon l'une des revendications 1 ou 2, caractérisé en ce qu'il comprend, en outre, au moins une charge minérale.

4. Liant composite selon l'une quelconque des revendications 1 à 3, caractérisé en ce qu'il comprend, en outre, au moins une charge organique.

5. Liant composite selon l'une quelconque des revendications 1 à 4, caractérisé en ce qu'il comprend, en outre, au moins une charge métallique.

6. Liant composite selon la revendication 3, caractérisé en ce que la charge minérale est constituée de farines siliceuses, de farines calcaires, de fibres naturelles, de fibres manufacturées ou l'un quelconque de leurs mélanges.

7. Liant composite selon la revendication 4, caractérisé en ce que la charge organique est constituée de fibres végétales, de fibres synthétiques, de polyamide, de polychlorure de vinyle, de polyesters, de polyéthylène, de polypropylène ou de l'un quelconque de leurs mélanges.

8. Liant composite selon la revendication 5, caractérisé en ce que la charge métallique est constituée de poudre d'aluminium, de limaille de fer, d'alliages de cuivre ou de l'un quelconque de leurs mélanges.

9. Liant composite selon l'une quelconque des revendications 1 à 8, caractérisé en ce qu'il comprend de 0 à 1 partie de charge minérale et de 0 à 15 parties de charge métallique.

10. Procédé d'obtention du liant composite selon l'une quelconque des revendications 1 à 9 caractérisé en ce qu'il consiste:
a) à introduire dans de l'eau à une température comprise entre environ 10°C et environ 80°C au moins un agent tensioactif;
b) à chauffer dans un récipient séparé au moins un liant hydrocarboné à une température comprise entre environ 100 et 200°C;
c) à mélanger l'agent tensioactif au liant hydrocarboné afin d'obtenir une émulsion aqueuse;
d) à envoyer l'émulsion aqueuse dans un homogénéiseur tout en introduisant dans cet homogénéiseur, de façon séparée, un liant hydraulique;
e) à introduire à un stade quelconque un adjuvant pour maîtriser la vitesse de prise du liant hydraulique, choisi parmi les plastifiants retardateurs pour béton;
f) à ajouter facultativement avant ou après le malaxage dans l'homogénéiseur une ou plusieurs charges;
g) à stocker le produit final en vue de son utilisation ultérieure.

11. Procédé selon la revendication 10, caractérisé en ce que l'adjuvant est ajouté directement dans l'émulsion aqueuse de liant hydrocarboné.

12. Procédé selon l'une des revendications 10 ou 11, caractérisé en ce que l'adjuvant est ajouté après le malaxage de l'émulsion aqueuse de liant hydrocarboné et de liant hydraulique dans l'homogénéiseur.

13. Procédé selon l'une quelconque des revendications 10 à 12, caractérisé en ce que le liant hydrocarboné est choisi parmi les bitumes purs, les bitumes de régénération, les solvants pétroliers paraffiniques, naphténiques ou aromatiques, les composés pétroliers résultant de distillats de vapocraquage, les goudrons purs, les huiles de fluxage de houille, les huiles lourdes, les brais mous et spéciaux.

14. Procédé selon l'une quelconque des revendications 10 à 13, caractérisé en ce que le liant hydraulique est du ciment ou du ciment de laitier à la chaux auquel de l'eau est ajoutée si nécessaire.

## Claims

1. A compound binder for road pavements comprising an aqueous emulsion of at least one hydrocarbon binder and at least one hydraulic binder mixed with various adjuvants and eventually fillers, characterised in that it comprises per 100 parts of hydraulic binder, from approximately 30 to 300 parts of aqueous emulsion of hydrocarbon binder, and approximately 0.2 to 1 part of at least an adjuvant liable to control the rate of setting of the hydraulic binder selected from the concrete retarder plasticizers, the said compound binder being an homogeous liquid with a viscosity of less than 1 Pa s, liable to be stored and used subsequently.

2. The compound binder according to claim 1, characterised in that the adjuvant is a product comprising sodium gluconate particularly the product having the tradename PLASTIRETARD.

3. The compound binder according to claims 1 or 2, characterised in that it comprises moreover at least one mineral filler.

4. The compound binder according to any one of claims 1 to 3, characterised in that it comprises moreover at least one organic filler.

5. The compound binder according to any one of claims 1 to 4, characterised in that it comprises moreover at least one metal filler.

6. The compound binder according to claim 3, characterised in that the mineral filler comprises siliceous flours, limestone flours, natural fibers, manufactured fibers or any one mixture thereof.

7. The compound binder according to claim 4, characterised in that the organic filler comprises vegetable fibers, synthetic fibers, polyamide, polyvinyl chloride, polyesters, polyethylene, polypropylene or any one mixture thereof.

8. The compound binder according to claim 5, characterised in that the metal filler comprises aluminium powder, iron filings, copper alloys or any one mixture thereof.

9. The compound binder according to any one of claims 1 to 8, characterized in that it comprises, 0 to 1 part of mineral filler and from 0 to 15 parts of metal filler.

10. A process for obtaining the compound binder according to any one of claims 1 to 9, characterized in that it comprises the steps of :
a) introducing at least one surfactant into water at a temperature of between approximately 10°C and approximately 80°C;
b) heating at least one hydrocarbon binder to a temperature of between approximately 100 and 200°C in a separate container;
c) mixing the surfactant with the hydrocarbon binder so as to obtain an aqueous emulsion;
d) conveying the aqueous emulsion to a homogenizer while introducing a hydraulic binder separately into this homogenizer;
e) introducing an adjuvant at any stage to control the rate of setting of the hydraulic binder, selected from the concrete retarder plasticizers;
f) optionally adding one or more fillers before or after the mixing into the homogenizer;
g) storing the final product for its subsequent utilization.

11. The process according to claim 10 characterized in that the adjuvant is added directly to the aqueous emulsion of hydrocarbon binder.

12. The process according to one of claim 10 or 11, characterized in that the adjuvant is added after the mixing of the aqueous emulsion of hydrocarbon binder and of hydraulic binder into the homogenizer.

13. The process according to any one of claims 10 to 12, characterized in that the hydrocarbon binder is selected from pure bitumens, regenerated bitumens, paraffinic, naphtenic or aromatic petroleum solvents, petroleum compounds resulting from steam-cracking distillates, pure tars, coal fluxing oils, heavy oils and soft and special pitches.

14. The process according to any one of claims 10 to 13, characterized in that the hydraulic binder is cement or slag cement containing lime, to which water is added if necessary.

## Patentansprüche

1. Zusammengesetztes Bindemittel für Strößendecken, bestehend aus einer wässrigen Emulsion mindestens eines Kohlenwasserstoffbindemittels und mindestens eines hydraulischen Bindemittels, gemischt mit verschiedenen Hilfsstoffen und gegebenenfalls Füllstoffen, dadurch gekennzeichnet, dass es auf 100 Teile hydraulisches Bindemittel ungefähr 30 bis 600 Teile wässrige Emulsion des Kohlenwasserstoffbindemittels und ungefähr 0,2 bis 1 Teil mindestens eines Hilfsstoffes enthält, der dazu dient, die Abbindegeschwindigkeit des hydraulischen Bindemittels einzustellen, und der unter den Verflüssigern-Abbindeverzögerern für Beton ausgewählt wurde, wobei das genannte zusammengesetzte Bindemittel eine homogene Flüssigkeit mit einer Viskosität kleiner 1 Pas ist und geeignet Ist, gelagert und später verwendet zu werden,

2. Zusammengesetztes Bindemittel nach Patentanspruch 1, dadurch gekennzeichnet, dass der Hilfsstoff ein Stoff ist, der Natriumgluconat enthält, insbesondere der Stoff, der unter der Handelsbezeichnung PLASTIRETARD bekannt ist.

3. Zusammengesetztes Bindemittel nach einem der Patentansprüche 1 oder 2, dadurch gekennzeichnet, dass es außerdem mindestens einen mineralischen Füllstoff enthält.

4. Zusammengesetztes Bindemittel nach irgendeinem der Patentansprüche 1 bis 3, dadurch gekennzeichnet, dass es außerdem mindestens einen organischen Füllstoff enthält.

5. Zusammengesetztes Bindemittal nach irgendeinem der Patentansprüche 1 bis 4, dadurch gekennzeichnet, dass es außerdem mindestens einen metallischen Füllstoff enthält.

6. Zusammengesetztes Bindemittel nach Patentanspruch 3, dadurch gekennzeichnet, dass der mineralische Füllstoff aus Kieselsäuremehlen, Kalkmehlen, natürlichen Fasern, künstlich hergestellten Fasern oder einer beliebigen Mischung aus diesen besteht.

7. Zusammengesetztes Bindemittel nach Patentanspruch 4, dadurch gekennzeichnet, dass dar organische Füllstoff aus pflanzlichen Fasern, synthetischen Fasern, Polyamid, Polyvinylchlorid, Polyestern, Polyethylen, Polypropylen oder einer beliebigen Mischung aus diesen besteht,

8. Zusammengesetztes Bindemittel nach Patentanspruch 6, dadurch gekennzeichnet, dass der metallische Füllstoff aus Aluminiumpulver, Feilspänen von Eisen oder Kupferlegierungen oder einer beliebigen Mischung aus diesen besteht.

9. Zusammengesetztes Bindemittel nach irgendeinem der Patentansprüche 1 bis 8, dadurch gekennzeichnet, dass es 0 bis 1 Teil mineralischen Füllstoff und 0 bis 15 Teile metallischen Füllstoff enthält.

10. Verfahren zur Herstellung des zusammengesetzten Bindemittels nach irgendeinem dor Patentansprüche 1 bis 9, dadurch gekennzeichnet, dass es darin besteht:
a) Wasser bei einer Temperatur zwischen ungefähr 10°C und ungefähr 80°C mindestens ein Netzhaftmittel zuzusetzen,
b) in einem getrennten Behälter mindestens ein Kohlenwasserstoffbindemittel auf eine Temperatur zwischen. ungefähr 100 und 200°C zu erhitzen,
c) das Netzhaftmittel mit dem Kohlenwasserstoffbindemittel zu mischen, um eine wässrige Emulsion zu erhalten,
d) die wässrige Emulsion in eine Homogenisieranlage zu fördern und dabei getrennt ein hydraulisches Bindsmittel in diese Homogenisieranlage einzubringen,
e) in einem beliebigen Schritt einen Hilfsstoff zum Einstellen der Abbindegeschwindigkeit des hydraulischen Bindemittels zuzusetzen, der unter den Verflüssigern-Abbindeverzögerern für Beton ausgewählt wurde,
f) wahlweise vor oder nach dem Zwangamischen In der Homogenisieranlage einen oder mehrere Füllstoffe zuzusetzen,
g) das Endprodukt für seine spätere Verwendung zu lagern.

11. Verfahren nach Patentanspruch 10, dadurch gekennzeichnet, dass der Hilfsstoff unmittelbar der wässrigen Emulsion des Kohlenwasserstoffbindemittels zugesetzt wird.

12. Verfahren nach einem der Patentansprüche 10 oder 11, dadurch gekennzeichnet, dass der Hilfsstoff nach dem Zwangsmischen der wässrigen Emulsion des Kohlenwasserstoffbindemittels und des hydraulischen Bindemittals in der Homogenisieranlage zugesetzt wird.

13. Verfahren nach irgendeinem dar Patentansprüche 10 bis 12, dadurch gekennzeichnet, dass das Kohlenwasserstoffbindemittel unter den Reinbitumen, den Regenerationsbitumen, den paraffinischen, naphthenischen oder aromatischen Lösungsmitteln auf Erdölbasis, den Verbindungen auf Erdölbasis, die aus Dampfcrackdistillaten hervorgehen, den reinen Teeren den Kohlefluxölen, den Schwerölen, den Welch- und Spezialpechen ausgewählt wird.

14. Verfahren nach irgendeinem der Patentansprüche 10 bis 13, dadurch gekennzeichnet, dass das hydraulische Bindemittel Zement ist oder Kalk-Schlackenzement, dem erforderlichenfalls Wasser zugesetzt wurde.
